# EUROPÄISCHE PATENTSCHRIFT

(11) **EP 0 989 408 B1**
(45) Veröffentlichungstag und Bekanntmachung des Hinweises auf die Patenterteilung: **14.05.2003**
(21) Anmeldenummer: 99118065.4
(22) Anmeldetag: 23.09.1999
(51) Int. Cl.: G01P 13/00, B61L 1/00, B61L 25/00

(54) **Verfahren und Vorrichtung zum Informieren von Fahrgästen eines Zuges**
Method and device for informing passengers of a train
Procédé et dispositif pour informer les passagers d'un train

(30) Priorität: 24.09.1998 DE 19843811; 18.03.1999 DE 19912219
(43) Veröffentlichungstag der Anmeldung: 29.03.2000
(73) Patentinhaber: Vossloh System-Technik Karlsfeld GmbH, 85757 Karlsfeld (DE)
(72) Erfinder: Dreher, Gunther, Dipl.-Ing., 81479 München (DE); Lentz, Gregor, Dipl.-Ing., 81541 München (DE); Wabschke, Rainer, Dipl.-Ing., 14612 Falkensee (DE)
(74) Vertreter: Schwarzensteiner, Marie-Luise, Dr.

(56) Entgegenhaltungen:
- EP-A- 0 403 954
- FR-A- 2 417 777
- PATENT ABSTRACTS OF JAPAN vol. 1998, no. 11, 30. September 1998 (1998-09-30) & JP 10 167071 A (NIPPON SIGNAL CO LTD:THE), 23. Juni 1998 (1998-06-23)
- PATENT ABSTRACTS OF JAPAN vol. 1997, no. 01, 31. Januar 1997 (1997-01-31) & JP 08 239041 A (NIPPON SIGNAL CO LTD:THE), 17. September 1996 (1996-09-17)
- PATENT ABSTRACTS OF JAPAN vol. 018, no. 637 (M-1716), 5. Dezember 1994 (1994-12-05) & JP 06 247306 A (TOSHIBA TORANSUPOOTO ENG KK;OTHERS: 01), 6. September 1994 (1994-09-06)
- PATENT ABSTRACTS OF JAPAN vol. 016, no. 203 (M-1247), 14. Mai 1992 (1992-05-14) & JP 04 031166 A (TOSHIBA CORP;OTHERS: 01), 3. Februar 1992 (1992-02-03)

## Beschreibung

Die Erfindung betrifft ein Verfahren zum Informieren von Fahrgästen eines Zuges nach Anspruch 1 und eine Vorrichtung zur Durchführung dieses Verfahrens nach Anspruch 4.

So ist in der JP 10 167071 A als nächstkommender Stand der Technik eine Anzeigevorrichtung mit einem dynamischen Körpersensor und einer üblicherweise auf Bahnhöfen und Flughafen anzutreffenden, optischen Anzeigeeinrichtung in Form eines Monitors offenbart. Die Anzeigevorrichtung ist im Bereich eines Bahnsteiges unterhalb eines Daches eines Zuges angeordnet. Durch den dynamischen Körpersensor soll die Anzeigeeinrichtung zur optischen Anzeige von Ankunfts-, Halte- und Abfahrtszeiten eines Zuges aktiviert und aktualisiert werden, und zwar ohne das Erfordernis einer aufwendigen, in herkömmlicher Weise verwendeten Verdrahtung. Zu diesem Zweck sollen Ultraschallsensoren die Anwesenheit eines Zuges im Bereich des Bahnsteiges ermittein und dessen Geschwindigkeit messen. Rechnereinheiten in sämtlichen entlang des Bahnsteiges angeordneten Anzeigeeinrichtungen erzeugen aus den Signalen der Ultraschallsensoren jeweils ein resultierendes Signal. Ultraschalleinrichtungen geben von den Ultraschallsensoren bzw. Rechnereinheiten ermittelte Informationen bzw. Signale über das Einlaufen, den Halt und das anschließende Auslaufen eines Zuges an die jeweils zueinander benachbarten Anzeigeeinrichtungen drahtlos weiter. Abgesehen davon, daß bei dieser Anzeigevorrichtung das Vorhandensein eines Zuges im Bereich eines Bahnsteiges und die Geschwindigkeit des Zuges jeweils ausschließlich durch Ultraschallsensoren ermittelt werden, sind bei dieser Anzeigevorrichtung konstruktive Vorkehrungen zur automatischen akustischen Durchsage von Informationen einerseits und zur Verknüpfung mit anderen Signalen aus dem Bahnbereich sowie zur Bildung eines für einen eintreffenden vorbestimmten Zug indikatives Signals andererseits nicht vorhanden.

Weiterhin beschreibt die FR 2 417 777 A1 eine Vorrichtung zur Erfassung eines Stoppsignals eines Zuges. Dabei umfaßt diese Vorrichtung einen Radarsensor zur Bestimmung der Geschwindigkeit des Zuges und eine Magnetschleife zur Ermittlung der Anwesenheit des Zuges. Diese Vorrichtung hat sich aufgrund deren konstruktiver Ausgestaltung in der Praxis als verhältnismäßig nachteilig herausgestellt. Zum einen wird ein Ausgangssignal des Radarsensors an eine Auswertungsschaltung spezifischer Ausgestaltung angelegt. So wird das von dem Radarsensor erzeugte und über eine Schalteinrichtung bereitgestellte Ausgangssignal erst an den Ausgang eines bistabilen Kippelementes angelegt und mit einem über ein weiteres bistabiles Kippelement bereitgestellten Signal der Magnetschleife abgeglichen sowie weiterverarbeitet, wenn die Geschwindigkeit des Zuges gleich Null ist. Demnach kommt die Magnetschleife erst zum Einsatz, wenn sich der Zug an dem Stoppsignal bereits im Stillstand befindet. Insoweit sind Radarsensor und Magnetschleife nicht parallel, sondern in Reihe geschaltet und wirken in zeitlicher Abfolge hintereinander. Zum anderen ist der bauliche Aufwand und damit zusammenhängend die Montage und Wartung einer Magnetschleife ausgesprochen aufwendig.

Darüber hinaus ist aus der EP 0 403 954 A2 eine Einrichtung zur Gleisfreimeldung im Eisenbahnwesen bekannt. Diese Einrichtung umfaßt einen pulsmodulierten Radarsender, der über einen Koppler mit zwei Sende-Empfangsantennen, zum Beispiel Hornstrahler, in Verbindung steht. Die eine Sende-Empfangsantenne ist dabei senkrecht auf die vorbeifahrenden Züge gerichtet. Die andere Sende-Empfangsantenne ist unter einem vorgegebenen Winkel schräg in Fahrtrichtung auf die vorbeifahrenden Züge gerichtet. Die ausgesendeten und von den Sende-Empfangsantennen letztendlich wieder aufgefangenen Signale werden über den Koppler an eine spezifische Auswertungsschaltung zur Verarbeitung der erhaltenen Signale weitergeleitet. Auf diese Weise soll die. Geschwindigkeit eines Zuges und damit einhergehend die jeweilige Zuglänge ermittelt werden, um eine Gleisfreimeldung abgeben zu können.

Des weiteren ist in der JP 08 239041 A eine Vorrichtung beschrieben, um den Halt eines Fahrzeuges, zum Beispiel eines Zuges, derart zu steuern, daß Türbereiche des Fahrzeuges mit Türbereichen eines Gebäudes oder dergleichen einander zugewandt sind. Zu diesem Zweck ist eine Ultraschall-Sende-/Empfangseinrichtung vorgesehen, deren Sende-Empfangsantennen zueinander in einem vorbestimmten Abstand entlang der Fahrstrecke des Fahrzeuges angeordnet sind. Aus den erhaltenen Signalen der Sende-Empfangsantennen wird die Fahrzeuggeschwindigkeit des Fahrzeugs berechnet und daraus die Beschleunigung bzw. Geschwindigkeitsverminderung ermittelt, die notwendig ist, um die Türbereiche des Fahrzeuges mit den Türbereichen eines Gebäudes etwa in Überdeckung zu bringen.

Auf einem vergleichbaren Funktionsprinzip dieser Vorrichtung basiert ebenfalls eine Zuggeschwindigkeitsbetätigungseinrichtung, die in der JP 06 247306 A beschrieben ist.

Die JP 04 031166 A offenbart schließlich eine Fernsteuerungsvorrichtung zur Optimierung der Öffnungszeit von Türen eines Zuges mit zwei Sensoren. Der eine Sensor ermittelt dabei die Ankunft bzw. das Vorhandensein eines Zuges, während der andere Sensor entsprechende Signale zum Öffnen bzw. Schließen der Türen des Zuges über eine Antenne sendet bzw. empfängt.

Ausgehend vom Stand der Technik liegt der Erfindung die Aufgabe zugrunde, ein Verfahren zur automatischen Durchsage von Informationen in Abhängigkeit von einem eintreffenden vorbestimmten Zug und eine entsprechende Vorrichtung zur Durchführung dieses Verfahrens bereitzustellen, mittels welchem bzw. welcher der Fahrgast rechtzeitig, schnell und insbesondere vollständig auf möglichst einfache und zuverlässige Weise mit Informationen versorgt werden kann.

Diese Aufgabe wird auf überraschend einfache Weise durch die Merkmale des Anspruchs 1 in verfahrenstechnischer Hinsicht und des Anspruchs 4 in vorrichtungstechnischer Hinsicht gelöst.

Demnach ist durch die Ausgestaltung des erfindungsgemäßen Verfahrens, bei welchem vor Erreichen des Stillstandes des Zuges im Bereich eines Bahnsteiges das Vorhandensein des Zuges durch einen Ultraschallsensor festgestellt wird und die Geschwindigkeit des Zuges durch einen Radarsensor ermittelt wird, die von dem Ultraschallsensor und dem Radarsensor erhaltenen Signale einer Rechnereinheit zugeführt werden, von der Rechnereinheit hieraus ein Signal über die Anwesenheit und den Stillstand des Zuges erzeugt und an eine Fahrgastinformationsanlage geliefert wird, das von der Rechnereinheit an die Fahrgastinformationsanlage gelieferte Signal von der Fahrgastinformationsanlage mit anderen Signalen aus dem Bahnbereich verknüpft und zu einem Signal, das für einen vorbestimmten Zug indikativ ist, gebildet werden, mittels welchem sodann eine automatische Durchsage von Informationen, die für aus dem vorbestimmten Zug aussteigende Fahrgäste bestimmt sind, gestartet wird, ein besonders vorteilhaftes Verfahren insgesamt erreicht, um einen in den Zug einsteigenden bzw. aus dem Zug aussteigenden Fahrgast mit entsprechenden Informationen zu versorgen. Bei der Verwirklichung dessen hat sich in der Praxis vor allem eine Paarung eines Ultraschallsensors mit einem Radarsensor von großem Vorteil erwiesen. Schließlich aber ist dabei von ganz besonders großer Bedeutung die Ausgestaltung der Erfindung, wonach das Signal des Ultraschallsensors und das Signal des Radarsensors mit Signalen der Fahrgastinformationsanlage verknüpft und zu einem Signal, das für die Ankunft eines vorbestimmten Zuges indikativ ist, gebildet werden. Durchzugebende bzw. durchgegebene Informationen sind damit dem jeweiligen vorbestimmten Zug zuordenbar.

Gleiches gilt für die erfindungsgemäße Vorrichtung nach Anspruch 4.

Vorteilhafte konstruktive Einzelheiten des erfindungsgemäßen Verfahrens sind in den Ansprüchen 2 und 3 und der erfindungsgemäßen Vorrichtung sind in den Ansprüchen 5 bis 11 beschrieben.

Die vorliegende Erfindung bezieht sich mithin auf ein Verfahren und eine Vorrichtung zum Ermitteln der Verzögerung bzw. des Anhaltens eines bestimmten, translatorisch auf einer vorgegebenen Bahn bewegten Gegenstandes im Bereich der Annäherung an den Stillstand mit der Möglichkeit der Erzeugung eines den Stillstand kennzeichnenden Signales.

Im allgemeinen befaßt sich die vorliegende Erfindung mit dem Erkennen des Anhaltens eines translatorisch bewegten Gegenstandes in einem bestimmten ortsfesten Bereich, um ein Signal zu liefern, mit dessen Hilfe ein vom Anhalten des zunächst translatorisch bewegten Gegenstandes abhängiger weiterer Vorgang ausgelöst wird.

Im besonderen bezieht, sich die vorliegende Erfindung auf eine Zughalterkennung, mit der das Anhalten eines in einen Bahnsteig eingefahrenen Zuges zuverlässig detektiert werden kann, um einer Fahrgastinformationsanlage (FIA) ein Signal zu liefern, mit dessen Hilfe z.B. eine automatische Durchsage gestartet werden kann. Diese Durchsage sollen die Fahrgäste dann hören, wenn sie den Zug verlassen.

Demzufolge ist eine Möglichkeit geschaffen, einen translatorisch bewegten Gegenstand während der Annäherung an den Bereich, in dem er nach einer Verzögerungsphase zum Stillstand kommt, dahingehend zu identifizieren, daß er der erwartete Gegenstand ist, und, im Fall, daß es sich tatsächlich um den erwarteten Gegenstand handelt, den Zeitpunkt des Stillstandes so prognostizieren zu können, daß ein im Zeitpunkt des Stillstandes gewollter Vorgang tatsächlich ausgelöst werden kann.

Im Fall der Zughalterkennung wird das Anhalten eines in einem Bahnsteig eingefahrenen Zuges zuverlässig erkannt und ein Signal geliefert, mit dessen Hilfe z.B. eine automatische Durchsage gestartet werden kann, die die Fahrgäste beim Verlassen des Zuges wahrnehmen können. Dies kann ermöglicht werden, ohne daß Störeinflüsse das Signal beeinträchtigen. Es ist also in diesem Fall sichergestellt, daß der erfaßte Zug auch tatsächlich der gerade auf diesem Bahnsteig erwartete Zug ist, daß es sich also weder um einen anderen Zug handelt, der auf diesem oder einem dem Gleis dieses Bahnsteigs unmittelbar benachbarten Gleis passierenden Zug handelt und daß sämtliche Störeinflüsse so weit wie möglich ausgeschaltet sind, die, in Fall der Zughalterkennung, Witterungseinflüsse, sich bewegende Personen oder Tiere und dergleichen sein können.

Ein wesentliches Aspekt der Erfindung ist dabei die Kombination von zwei Einzelsensoren, von denen einer vorzugsweise ein Ultraschallsensor ist, der die Anwesenheit eines Gegenstandes innerhalb eines vorgegebenen Toleranzfensters, also eines Zuges in einem bestimmten Abstandsfenster, detektiert, und von denen der zweite Einzelsensor vorzugsweise ein Radarsensor ist, der ein geschwindigkeitsindikatives Signal abgibt, wenn ein bewegter Gegenstand sich im Bereich des von ihm ausgesandten Strahls befindet.

Eine solche erfindungsgemäße Kombination von Einzelsensoren wird an dem Bewegungsbereich des Gegenstandes, also insbesondere an den jeweiligen Bahnsteigen installiert. Zusammen mit anderen Signalen aus dem Bahnbereich kann die FIA das vom Sensor gelieferte Signal bestimmten Zügen zuordnen. Der erfindungsgemäße Sensor ist dabei so ausgestaltet, daß er von Witterungseinflüssen und sich bewegenden Personen, Tieren oder Gegenständen nicht gestört oder getäuscht wird. Er ist ausserhalb des Bahnkörpers montierbar, so daß aufwendige Verkabelungen und zusätzliche Maßnahmen zur Absicherung des Sensors vermieden sind. Vorteilhaft ist die Anbringung des Sensors an einem üblichen Zugzielanzeiger der FIA, weil dadurch dessen Stromversorgung und vorhandene Signalwege mitbenutzt werden können. Es ist mit ihm möglich, verschiedene Arten von Gegenständen, insbesondere Züge, (S-Bahn, Doppelstockwagen, IC bis hin zum ICE) sicher zu erkennen.

Von den kombinierten Einzelsensoren ist der erste Einzelsensor, vorzugsweise ein Ultraschallsensor, so ausgerichtet, daß seine Wirklinie senkrecht auf eine Gegenstands-., vorzugsweise also eine Zugoberfläche, gerichtet ist, während der zweite Einzelsensor, vorzugsweise ein Radarsensor, unter 45° zur Gegenstands-, also Zuglängsachse ausgerichtet montiert ist und ein Signal abgibt, wenn ein in Gleisrichtung bewegter Gegenstand sich in seinem Strahlbereich befindet.

Die Kombination der Ausgangssignale beider Einzelsensoren
. Gegenstand im Fenster des Meßfeldes des Ultraschall sensors
. keine Bewegung durch den Radarsensor mehr detektierbar
liefert das Signal "ein Zug hat auf dem beobachteten Gleis angehalten", wobei es sich gegebenenfalls, durch Verknüpfung mit anderen FIA-Signalen um die Bildung eines Signales handeln kann, das indikativ dafür ist, daß der anhaltende Zug nicht ein beliebiger Zug ist, sondern ein Zug, der erwartet wurde.

Im Fall der Zughalterkennung sind beide Einzelsensoren so ausgerichtet, daß sie nur den oberen Wagenbereich (Dachbereich) erfassen. Auf diese Weise werden störende Bewegungen, ausgehend von Passanten oder sich öffnenden Türen, nicht erfaßt.

Die beiden Ausgangssignale der Einzel-Sensoren werden in einer Rechnereinheit, die sich in dem Anzeiger der FIA-Anlage befindet, bei Bedarf weiter verarbeitet. Ziel dieser Weiterverarbeitung kann ein Ausfiltern von Störungen sein, die sich beispielsweise ergeben können, wenn das Geschwindigkeitssignal kurzzeitig unterbochen ist oder andere inplausible Zustände auftreten.

Die beiden Einzelsensoren sind im Fall der Zughalterkennung, ein Ultraschall- und ein Radarsensor sein. Es können grundsätzlich auch andere Einzelsensoren verwendet werden, welche vergleichbare Eigenschaften haben, d.h. die Anwesenheit eines sich bewegenden Gegenstandes und dessen Geschwindigkeit zu detektieren. So könnte beispielsweise an die Stelle des Radarsensors ein ebenfalls bekannter Videosensor treten und mit einem Ultraschallsensor gepaart werden; alle solche Sensoren für sich sind in der Überwachungstechnik ja wohlbekannt. Die Paarung eines Ultraschallsensors mit einem Radarsensor liefert jedoch die besten Ergebnisse, wie durchgeführte Versuche erwarten lassen.

Die Erfindung in der Verwendung zur Zughalterkennung ist in der Zeichnung dargestellt und wird nachfolgend anhand der Zeichnung erläutert. Hierbei zeigen:
- Fig. 1: eine schematische Darstellung einer Ausführungsform einer erfindungsgemäßen Vorrichtung zur Zughalterkennung mit erfindungsgemäßen Einzelsensoren in einem gemeinsamen Gehäuse,
- Fig. 2: eine Schematische Darstellung eines konstruktiven Einzelheit der Ausführungsform der erfindungsgemäßen Vorrichtung nach Fig. 1 zur Erläuterung einer optional anzuwendenden Einrichtung,
- Fig. 3: eine schematische Darstellung der Anordnung der Zughalterkennung in Fahrtrichtung eines Zuges, und
- Fig. 4: eine Draufsicht auf die Anordnung des Zughalterkennung nach Fig. 3.

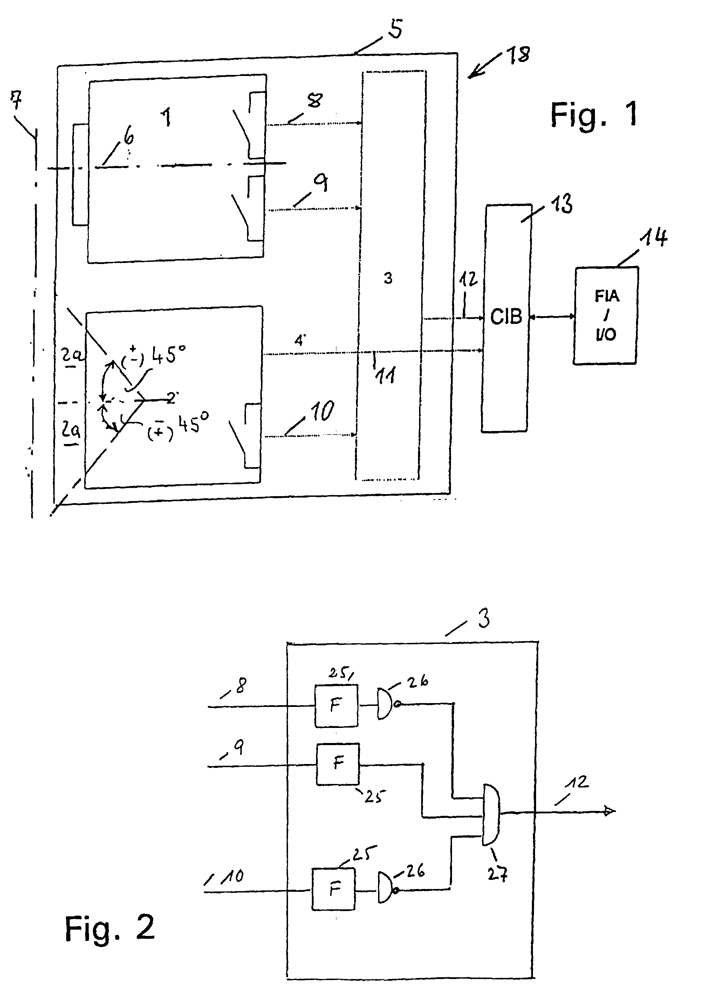

In der Fig. 1 ist mit 1 ein Ultraschallsensor als einer von zwei Einzelsensoren 1, 2 in einem gemeinsamen Gehäuse 5 bezeichnet. Die Ausrichtung dieses Sensors 1 mit seiner Wirklinie 6 ist senkrecht zur Bewegungsrichtung 7 eines translatorisch bewegten Gegenstandes. Mit dem Bezugszeichen 2 ist als zweiter der beiden Einzelsensoren 1, 2 ein Radarsensor bezeichnet, der ebenfalls im Gehäuse 5 angeordnet ist und ein Signal abgibt, wenn ein bewegtes Objekt sich in einem der beiden Strahlbereiche 2a +45° bzw. -45° befindet, wobei eine Bewegungskomponente in Richtung des Radarstrahles erfolgen muß. Ob sich dabei das Objekt zur Erfassung im Bereich + 45° oder im Bereich -45° befindet, ist abhängig davon, von welcher der zwei Seiten sich das Objekt an den Sensor annähert. Die Ausgangssignale der Einzelsensoren, gekennzeichnet durch die unterbrochenen Pfeile 8, 9, 10 werden gegebenenfalls zur Vorverarbeitung einer Rechnereinheit 3 zugeführt, während eventuelle serielle Daten (unterbrochener Pfeil 11), wie auch das Ergebnis der Vorverarbeitung (unterbrochener Pfeil 12) der Rechnereinheit 13 zugeführt werden, die in die Fahrgaastinformationsanlage 14 oder den Zugzielanzeiger 19 integriert ist.

Zu der Vorverarbeitung in der Rechnereinheit 3 wird auf Fig. 2 Bezug genommen, wobei diese Art der Vorverarbeitung nur eine von mehreren denkbaren Möglichkeiten darstellt. Insbesondere ist die dargestellte Ausführung - bestehend aus Gattern und Funktionsblöcken, wie sie in früherer konventionellerer Technik gewählt worden wäre - nur zum leichteren Verständnis gewählt. Eine in beliebiger anderer Technik ausgeführte Realisierung, welche die gleiche Funktionsweise ergibt, ist selbstverständlich denkbar.

Die Signale 8, 9 und 10 der Einzelsensoren werden jeweils einer Filtereinheit 25 zugeführt, welche die Aufgaben hat, kurzzeitige Störungen (Unterbrechungen des Signals oder Vorhandensein eines Signals, wenn keines vorhanden sein sollte) zu unterdrücken. Die derart gefilterten Signale werden nun in folgender Weise kombiniert:
- Ein Gegenstand hat den unteren Grenzwert des Ultraschallsensors nicht unterschritten.
- Ein Gegenstand hat den oberen Grenzwert des Ultraschallsensors unterschritten.
- Das Geschwindigkeitssignal ist 0.

Diese drei Signale werden einer Und-Verknüpfung zugeführt. Dieses Ausgangssignal wird logisch 1, wenn ein Zug auf dem Gleis ist und angehalten hat.

Zusammen mit den erwähnten anderen Signalen der FIA (Erwartung eines Zuges) kann mit dem Signal 12 auf den tatsächlichen Zughalt geschlossen werden.

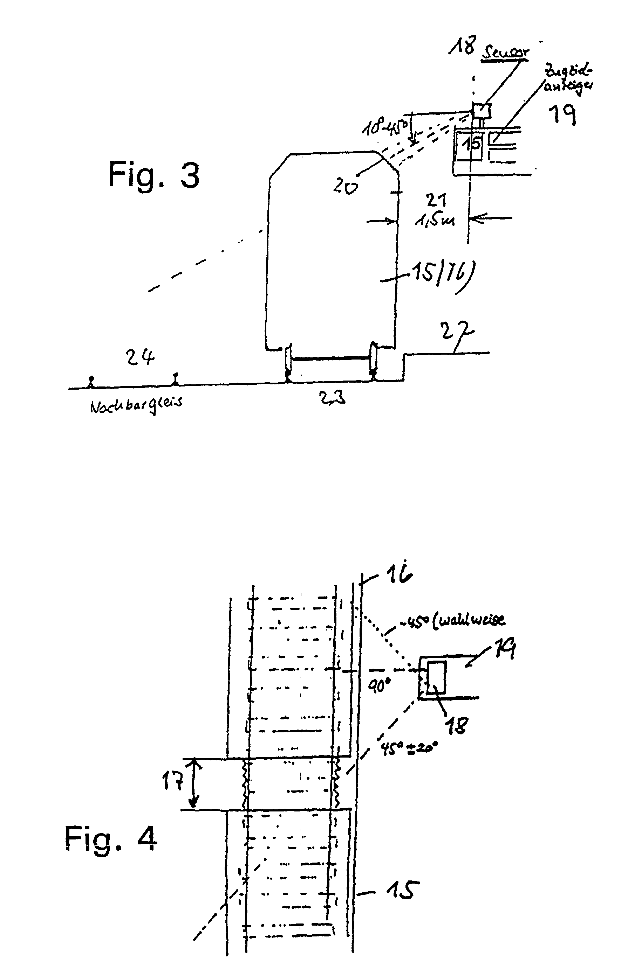

Gemäß Fig. 3, 4 sind mehrere Wageneinheiten (hier 15, 16) eines Zuges unter Einhaltung eines Abstandes 17 miteinander gekoppelt. Der die beiden Einzelsensoren 1, 2 in dem gemeinsamen Gehäuse 5 einschließende Sensor 18 ist dem Zugzielanzeiger 19 zugeordnet, derart, daß beide Einzelsensoren 1, 2 mit dem Übergangsbereich 20 zwischen dem Seitenwand- und dem Dachbereich des Zuges zusammenwirken und die Wirkstrahlen der Einzelsensoren in der Vertikalebene (Fig.3) unter einem Neigungswinkel zwischen 10 und 45° gegen die Horizontale auf den Übergangsbereich 20 auftreffen, dergestalt, daß der Strahl des Ultraschallsensors möglichst eine Normale auf die Wagenoberfläche bildet und daß die Strahlen beider Sensoren oberhalb der Türbereiche auftreffen. In Fig. 4 ist der Austrittswinkel des Radarsensors 2 mit 45° eingezeichnet, wobei dieser Winkel 45° +/- 20° betragen sollte, um eine möglichst sichere Gechwindigkeitserfassung im Bereich der Wagenlücken 17 zu ermöglichen, wenn diese bei sehr glätten Wagenoberflächen nicht möglich ist.

Die optimale Anbringung unter -45° ist für den Fall vorgesehen, daß der Radarsensor 2 nur eine einzige Geschwindigkeitsrichtung detektieren kann, und Züge aus der anderen Richtung erwartet werden. Der Abstand 21 des Sensors 18 vom Objekt sollte angesichts der gegebenen Winkel wie oben angegeben etwa 1,5 m betragen. Gemäß der Gleisanlagensituation sollten sich neben dem Bahnsteig 22 das Gleis 23 befinden, dem der Zug (Wageneinheiten 15, 16) zugeordnet ist, und in bahnüblichem Abstand möglicherweise ein Nachbargleis 24.

Demzufolge erfaßt der Geschwindigkeits- bzw. Radareinzelsensor 2 - montiert am gewählten Ort - zwangsläufig auch Bewegungen auf dem Nachbargleis 24, weil eine scharf eingestellte Reichweitenbegrenzung technisch nicht realisierbar ist. Dies ist der Grund dafür, den Geschwindigkeits- bzw. Radarsensor 2 dem Einzelsensor in der Form des Ultraschallsensors 1 zuzuordnen, der das Signal liefert, ob sich auf dem tatsächlich überwachten Gleis 23 ein Zug 15, 16 befindet.

Die Vorteile des Radarsensors 2 zur Geschwindigkeitsüberwachung sind der kleine Öffnungswinkel der Meßkeule und die absolute Wetterunempfindlichkeit, die bei der primär vorgesehenen Verwendung von besonderer Bedeutung sind.

Der Ultraschallsensor 1 ist demgegenüber in wesentlich höherem Maße von Witterung (Schneefall, starker Regen) beeinflußbar, dies ist jedoch im vorliegenden Fall wegen der vergleichsweise geringen Meßdistanz, die für die Anwesenheitsüberwachung relevant ist, ohne besondere Bedeutung.

Ein optischer Einzel-Sensor (Videosensor), wie er aus der Überwachungstechnik bekannt ist, könnte zwar ebenfalls das Vorhandensein einer Bewegung detektieren; das Meßprinzip ist hier jedoch die Auswertung sich verändernder Helligkeit in einem definierten Meßfenster des Gesamtbildes. Da solche Helligkeitsunterschiede im bevorzugten Anwendungsfall jedoch auch durch vorbeiziehende Wolken ausgelöst werden können und, da bestimmte Züge (z.B. der ICE) in dem zu überwachenden Dachbereich nahezu gleiche Helligkeit aufweisen, hat dieses Meßverfahren Nachteile gegenüber der Erfindung in deren bevorzugtem Anwendungsfall. Mit den derzeit verfügbaren und für den bevorzugten Anwendungsfall finanziell vertretbaren Videosensorenläßt sich eine optimale Einstellung nur sehr schwer oder gar nicht erreichen.

Im Rahmen einer Zusammenfassung kann die vorliegende Erfindung wie folgt definiert werden:

Gegenstand der Erfindung ist ein Verfahren zum Ermitteln der Verzögerung eines bewegten Gegenstandes und eine Vorrichtung zur Durchführung dieses Verfahrens. Kern der Erfindung ist ein Sensor, der zwei Einzelsensoren einschließt, von denen der eine Sensor der Gegenstandserkennung dient und vorzugsweise ein Ultraschallsensor ist, während der andere der Geschwindigkeitserkennung dient und vorzugsweise ein Radarsensor ist. Insbesondere dienen Verfahren und Vorrichtung der Zughalterkennung im Bahnbetrieb. Beide Einzelsensoren übermitteln ihre Ermittlungen an einen Rechner, mit dessen Hilfe ein resultierendes Signal ermittelt wird, das indikativ für das Halten der Zuges dient und für die Weiterverarbeitung zur Verfügung steht.

## Patentansprüche

1. Verfahren zum Informieren von Fahrgästen eines Zuges, bei welchem vor Erreichen des Stillstandes des Zuges (15, 16) im Bereich eines Bahnsteiges (22) das Vorhandensein des Zuges (15, 16) durch einen Ultraschallsensor (1) festgestellt wird und die Geschwindigkeit des Zuges (15, 16) durch einen Radarsensor (2) ermittelt wird, die von dem Ultraschallsensor (1) und dem Radarsensor (2) erhaltenen Signale einer Rechnereinheit zugeführt werden, von der Rechnereinheit hieraus ein Signal über die Anwesenheit und den Stillstand des Zuges (15, 16) erzeugt und an eine Fahrgastinformationsanlage (14) geliefert wird, das von der Rechnereinheit an die Fahrgastinformationsanlage (14) gelieferte Signal von der Fahrgastinformationsanlage (14) mit anderen Signalen aus dem Bahnbereich verknüpft und zu einem Signal, das für einen vorbestimmten Zug indikativ ist, gebildet wird, mittels welchem sodann eine automatische Durchsage von Informationen, die für aus dem vorbestimmten Zug aussteigende Fahrgäste bestimmt sind, gestartet wird.

2. Verfahren nach Anspruch 1, **dadurch gekennzeichnet, daß** das Vorhandensein des Zuges (15, 16) durch den Ultraschallsensor (1) festgestellt wird, dessen Wirkachse (6) senkrecht zur Bewegungsrichtung (7) des Zuges (15, 16) ausgerichtet wird.

3. Verfahren nach Anspruch 1 oder 2, **dadurch gekennzeichnet, daß** die Geschwindigkeit des Zuges (15, 16) durch den Radarsensor (2) ermittelt wird, dessen Wirkbereich in einem Winkelbereich von etwa (90° ± 45°) ± 20° gegenüber der Bewegungsrichtung (7) des Zuges (15, 16) ausgerichtet wird.

4. Vorrichtung zum Informieren von Fahrgästen eines Zuges (15, 16) zur Durchführung des Verfahrens nach einem der Ansprüche 1 bis 3, die einen Sensor (18) mit einem Gehäuse (5), in welchem ein Ultraschallsensor (1) und ein Radarsensor (2) angeordnet sind, eine Rechnereinheit, welche mit dem Sensor (18) verbunden ist, und eine Fahrgastinformationsanlage (14), welche wiederum mit der Rechnereinheit verbunden ist, umfaßt und derart ausgebildet ist, daß vor Erreichen des Stillstandes des Zuges (15, 16) im Bereich eines Bahnsteiges (22) das Vorhandensein des Zuges (15, 16) durch den Ultraschallsensor (1) festgestellt wird und die Geschwindigkeit des Zuges (15, 16) durch den Radarsensor (2) ermittelt wird, die von dem Ultraschallsensor (1) und dem Radarsensor (2) erhaltenen Signale der Rechnereinheit zugeführt werden, von der Rechnereinheit hieraus ein Signal über die Anwesenheit und den Stillstand des Zuges (15, 16) erzeugt und an die Fahrgastinformationsanlage (14) geliefert wird, das von der Rechnereinheit an die Fahrgastinformationsanlage (14) gelieferte Signal von der Fahrgastinformationsanlage (14) mit anderen Signalen aus dem Bahnbereich verknüpft und zu einem Signal, das für einen vorbestimmten Zug indikativ ist, gebildet werden, mittels welchem sodann eine automatische Durchsage von Informationen, die für aus dem vorbestimmten Zug aussteigende Fahrgäste bestimmt sind, gestartet wird.

5. Vorrichtung nach Anspruch 4, **dadurch gekennzeichnet, daß** der Sensor (18) außerhalb eines Gleiskörpers (23, 24) des Zuges (15, 16) angeordnet ist.

6. Vorrichtung nach Anspruch 4 oder 5, **dadurch gekennzeichnet, daß** der Sensor (18) im Bereich des Bahnsteiges (22) seitlich von einem Gleis (23) oder Gleispaar (23, 24) angeordnet ist.

7. Vorrichtung nach einem der Ansprüche 4 bis 6, **dadurch gekennzeichnet, daß** der Sensor (18) relativ zu dem Zug (15, 16) in einer Höhe angeordnet ist, derart, daß der Ultraschallsensor (1) und der Radarsensor (2) mit einem oberen Bereich eines Wagens des Zuges (15, 16) zusammenwirken.

8. Vorrichtung nach Anspruch 7, **dadurch gekennzeichnet, daß** der Ultraschallsensor (1) und der Radarsensor (2) auf einen Übergangsbereich (20) zwischen dem Seitenwand- und Dachbereich des Zuges (15, 16) gerichtet sind.

9. Vorrichtung nach Anspruch 8, **dadurch gekennzeichnet, daß** die Wirkstrahlen des Ultraschallsensors (1) und des Radarsensors (2) auf den Übergangsbereich (20) um einen Neigungswinkel zwischen 10 ° und 45 ° gegenüber der Horizontalebene auftreffen.

10. Vorrichtung nach einem der Ansprüche 4 bis 9, **dadurch gekennzeichnet, daß** der Sensor (18) an einem Zugzielanzeiger (19) im Bereich des Bahnsteiges (22) angeordnet ist.

11. Vorrichtung nach Anspruch 10, **dadurch gekennzeichnet, daß** der Sensor (18) über den Zugzielanzeiger (19) mit Energie versorgbar ist.

## Claims

1. A method for informing passengers of a train comprising, before standstill of the train (15, 16), the steps of detecting the presence of the train (15, 16) in the region of a platform (22) by an ultrasonic sensor (1) and detecting the velocity of the train (15, 16) by a radar sensor (2), supplying the signals obtained by the ultrasonic sensor (1) and radar sensor (2) to a processor, generating by the processor a signal as to the presence and standstill of the train (15, 16) and supplying it to a passenger information system (14), combining the signal supplied by the processor to the passenger information system (14) by the passenger information system (14) with other signals from the train describer and forming them into a signal indicative of a predefined train, and then automatically starting therewith an public address of information dedicated to passengers alighting from the predefined train.

2. The method as set forth in claim 1, **characterized in that** the presence of the train (15, 16) is detected by the ultrasonic sensor (1) whose beam line (6) is oriented perpendicular to the moving direction (7) of the train (15, 16).

3. The method as set forth in claim 1 or 2, **characterized in that** the velocity of the train (15, 16) is detected by the radar sensor (2) whose effective range is oriented in an angular range of approximately (90° ± 45°) ± 20° relative to the moving direction (7) of the train (15, 16).

4. A device for implementing the method for informing passengers of a train (15, 16) as set forth in any of the claims 1 to 3, comprising a sensor (18) having a housing (5), in which an ultrasonic sensor (1) and a radar sensor (2) are arranged, a processor connected to the sensor (18), and a passenger information system (14), which is in turn connected to the processor, and configured such that, before standstill of the train (15, 16), the presence of the train (15, 16) in the region of a platform (22) is detected by the ultrasonic sensor (1) and the velocity of the train (15, 16) is detected by the radar sensor (2), the signals obtained by the ultrasonic sensor (1) and radar sensor (2) are supplied to the processor, by the processor a signal is generated as to the presence and standstill of the train (15, 16) and supplied to the passenger information system (14), the signal supplied by the processor to the passenger information system (14) is combined by the passenger information system (14) with other signals from the train describer and is formed into a signal indicative of a predefined train, by means of which then an public address of information dedicated to passengers alighting from the predefined train is automatically started.

5. The device as set forth in claim 4, **characterized in that** the sensor (18) is arranged outside of a track (23, 24) of the train (15, 16).

6. The device as set forth in claim 4 or 5, **characterized in that** the sensor (18) is arranged in the region of the platform (22) to one side of a track (23) or a pair of tracks (23, 24).

7. The device as set forth in any of the claims 4 to 6, **characterized in that** the sensor (18) is arranged at a height relative to the train (15, 16) such that the ultrasonic sensor (1) and the radar sensor (2) cooperate with an upper area of a carriage of the train (15, 16).

8. The device as set forth in claim 7, **characterized in that** the ultrasonic sensor (1) and the radar sensor (2) are directed to a transitional area (20) between the sidewall and roof area of the train (15, 16).

9. The device as set forth in claim 8, **characterized in that** the scanning beams of the ultrasonic sensor (1) and of the radar sensor (2) impinge the transitional area (20) at an angle between 10° and 45 relative to the horizontal plane.

10. The device as set forth in any of the claims 4 to 9, **characterized in that** the sensor (18) is arranged on a destination annunciator (19) in the region of the platform (22).

11. The device as set forth in claim 10, **characterized in that** the sensor (18) can be powered via the destination annunciator (19).

## Revendications

1. Procédé pour informer les passagers d'un train, dans lequel, avant d'atteindre l'immobilisation du train (15, 16), dans la zone d'un quai (22), la présence du train (15, 16) est constatée au moyen d'un capteur à ultrasons (1) et la vitesse du train (15, 16) est déterminée au moyen d'un capteur radar (2), les signaux obtenus depuis le capteur à ultrasons (1) et le capteur radar (2) sont amenés à une unité de calcul, un signal, concernant la présence et l'immobilisation du train (15, 16), est généré depuis l'unité de calcul et fourni à une installation d'information des passagers (14) qui combine le signal, fourni par l'unité de calcul à l'installation d'information de passager (14), par intervention de l'installation d'information des passagers (14), à d'autres signaux émanant de la zone de la voie ferrée et produit un signal indicatif d'un train prédéterminé, signal au moyen duquel, ensuite, un message phonique automatique, contenant des informations déterminées pour les passagers sortant du train déterminé, est lancé.

2. Procédé selon la revendication 1, **caractérisé en ce que** la présence du train (15, 16) est constatée par le capteur à ultrasons (1), dont l'axe actif (6) est orienté perpendiculairement à la direction de déplacement (7) du train (15, 16).

3. Procédé selon la revendication 1 ou 2, **caractérisé en ce que** la vitesse du train (15, 16) est déterminée par le capteur radar (2), dont la plage active est orientée dans une plage angulaire d'environ (90° ± 45°) ± 20° par rapport à la position de déplacement (7) du train (15, 16).

4. Dispositif d'information de passagers d'un train (15, 16) pour mise en oeuvre du procédé selon l'une des revendications 1 à 3, comprenant un capteur (18) avec un boîtier (5) dans lequel sont disposés un capteur à ultrasons (1) et un capteur calcul reliée au capteur (18) et une installation d'information des passagers (14) qui, à son tour, est reliée à l'unité de calcul et réalisée de manière que, avant atteinte de l'immobilisation du train (15, 16), dans la zone d'un quai (22), la présence du train (15, 16) soit constatée par le capteur à ultrasons (1) et la vitesse du train (15, 16) soit déterminée par le capteur radar (2), les signaux obtenus par le capteur à ultrasons (1) et le capteur radar (2) étant amenés à l'unité de calcul, un signal concernant la présence et l'immobilisation du train (15, 16) est produit depuis l'unité de calcul et fourni à l'unité d'information des passagers (14), qui combine le signal fourni par l'unité de calcul à l'installation d'information des passagers (14), signal venant de l'installation d'information des passagers (14), avec d'autres signaux provenant de la zone de la voie ferrée et forme un signal indicatif d'un train prédéterminé, signal au moyen duquel ensuite un message phonique automatique, conçue pour des passagers descendant du train prédéterminé, est lancé.

5. Dispositif selon la revendication 4, **caractérisé en ce que** le capteur (18) est disposé à l'extérieur d'un corps de voie (23, 24) du train (15, 16).

6. Dispositif selon la revendication 4 ou 5,
**caractérisé en ce que** le capteur (18) est disposé dans la zone du quai (22), sur le côté d'une voie (23) ou d'une paire de voies (23, 24).

7. Dispositif selon l'une des revendications 4 à 6,
**caractérisé en ce que** le capteur (18) est disposé, par rapport au train (15, 16), à une hauteur telle que le capteur à ultrasons (1) et le capteur radar (2) coopèrent avec une zone supérieure d'une voiture du train (15, 16).

8. Dispositif selon la revendication 7, **caractérisé en ce que** le capteur à ultrasons (1) et le capteur radar (2) sont orientés sur une zone de transition (20), entre la zone de paroi latérale et la zone de toit du train (15, 16).

9. Dispositif selon la revendication 6, **caractérisé en ce que** les rayons actifs, du capteur à ultrasons (1) et du capteur radar (2), touchent la zone de transition (20) sur un angle d'inclinaison compris entre 10° et 45° par rapport à l'horizontale.

10. Dispositif selon l'une des revendications 4 à 9, **caractérisé en ce que** le capteur (18) est disposé sur un indicateur de destination des trains (20) installé dans la zone du quai (22).

11. Dispositif selon la revendication 10, **caractérisé en ce que** le capteur (18) peut être alimenté en énergie par l'intermédiaire de l'affichage de destination des trains (18).
